# FASCICULE DE BREVET EUROPEEN

(11) **EP 3 030 410 B1**
(45) Date de publication et mention de la délivrance du brevet: **09.01.2019**
(21) Numéro de dépôt: 14752920.0
(22) Date de dépôt: 26.06.2014
(51) Int. Cl.: B29D 30/06, B29C 33/30, B29C 33/42, B29D 30/00, B29D 30/72, B29L 30/00

(54) **MOULE POUR PNEUMATIQUE COMPORTANT UNE COQUILLE AVEC PARTIES AMOVIBLES**
REIFENFORM MIT EINEM FORMGEBENDEN TEIL, DER MIT ABNEHMBAREN TEILSTÜCKEN VORGESEHEN IST
TIRE MOULD COMPRISING A MOULDING PORTION HAVING REMOVABLE PARTS

(30) Priorité: 05.08.2013 FR 1301881
(43) Date de publication de la demande: 15.06.2016
(73) Titulaire: Compagnie Générale des Etablissements Michelin, 63000 Clermont-Ferrand (FR)
(72) Inventeur: VILLENEUVE, Bernard, F-63040 Clermont-Ferrand Cedex 9 (FR); GUEUGNEAU, Anthony, F-63040 Clermont-Ferrand Cedex 9 (FR)
(74) Mandataire: Demaure, Pierre-Yves
(86) Numéro de dépôt international: PCT/IB2014/001224
(87) Numéro de publication internationale: WO 2015/019138

(56) Documents cités:
- WO-A1-2010/076502
- DE-A1-102007 005 455
- DE-A1-102010 017 251
- US-A- 1 632 310
- US-A- 5 288 449
- US-A- 5 643 519

## Description

### DOMAINE TECHNIQUE DE L'INVENTION

La présente invention concerne les moules pour pneumatiques. Plus particulièrement, elle se rapporte au moulage des éléments de formes diverses sur les flancs de ces pneumatiques.

### ETAT DE LA TECHNIQUE ANTERIEURE

Il est connu que les flancs des pneumatiques comportent un grand nombre de marquages, tels que la marque du fabriquant, le type de pneumatique, les dimensions du pneumatique etc. Ces marquages sont obtenus en prévoyant sur le moule, et plus particulièrement sur des parties latérales de ce moule dites « coquilles », des moyens aptes à mouler ces marquages, appelés ci-après « moyens de marquage ». Les coquilles sont des pièces de révolution, généralement en acier, et les motifs ou marquages à reproduire sur les pneus sont réalisés par usinage, par exemple par gravure ou fraisage. Lorsque ces pièces présentent des difficultés de réalisation par des moyens d'usinage conventionnels tels que le tournage ou le fraisage, il est possible de les obtenir en utilisant des pièces en aluminium obtenues par fonderie. Il est alors possible de mettre en oeuvre une vaste panoplie de motifs à imprimer.

Or, en fonction du type de pneumatique à produire, il peut être nécessaire de faire évoluer les motifs initialement prévus.

Le document US4547139 divulgue l'utilisation de plaquettes amovibles placées dans une coquille d'un moule. Ces plaquettes comportent des moyens de marquage comprenant des indications qu'il faut changer régulièrement, comme par exemple la période de fabrication du pneumatique. Cependant, la taille de la plaquette étant relativement petite, la surface des éléments qu'elle peut contenir est limitée. Il n'est donc pas possible d'intégrer une surface significative d'éléments de sculpture sur les flancs. En outre, la fixation de la plaquette dans le moule est complexe.

**Le** document JP61019314 divulgue l'utilisation d'un insert amovible se présentant sous la forme d'une pièce monobloc annulaire. Plus particulièrement, cet insert annulaire est logé dans une rainure s'étendant dans une coquille du moule. Cet insert présente alors un diamètre relativement important, ce qui nécessite une grande précision dans sa réalisation afin que celui-ci s'adapte de manière satisfaisante à la rainure, et ceci sur toute la circonférence de cette rainure.

Le document WO2010/076502 décrit un ensemble de garniture pour moule de pneumatique comprenant une partie de coquille amovible pourvue de première et seconde surfaces opposées, la première surface étant en contact avec un bloc support d'un moule, la seconde surface portant une pluralité d'éléments de garniture en saillie, ces éléments étant destinés à former les sculptures d'une bande de roulement d'un pneumatique. Il est précisé que la surface de support est sensiblement lisse et présente une forme épousant sensiblement la courbure générale de la bande de roulement du pneumatique à mouler. Ce profil est donc complexe et coûteux à réaliser, et il permet d'interagir uniquement pour les motifs de la bande de roulement du pneumatique.

Le document DE102007005455 décrit un moule pour la vulcanisation et le moulage d'un pneumatique. Ce moule comprend au moins une coquille permettant le moulage du flanc du pneumatique. Un insert peut être installé dans cette coquille, insert comportant des creux et des reliefs permettant le marquage du flanc du pneumatique. L'insert ainsi décrit par le document est en matériau plastique ou silicone.

Le document WO2010076502 divulgue un jeu de garnitures comprenant une peau ayant deux surfaces opposées, la première étant destinée à être en contact avec un bloc de support d'un moule de pneumatique et une pluralité d'éléments de garniture faisant saillie à partir de la seconde surface de la peau, les éléments de garniture étant destinés à former des motifs de bande de roulement sur une partie d'une surface radialement externe d'un pneumatique. Ce document ne concerne que le moulage de la zone correspondant à la bande de roulement du pneumatique.

Il existe donc un besoin de proposer une solution de remplacement de moyens de moulage des motifs s'étendant sur les flancs d'un pneumatique qui permet de proposer une surface de moulage suffisante, tout en étant plus simple et plus pratique à réaliser que dans l'art antérieur.

### EXPOSE DE L'INVENTION

Un premier objet de l'invention consiste à prévoir un moule spécifiquement adapté pour le moulage des motifs et/ou marquages s'étendant sur les flancs des pneumatiques.

Un autre objet de l'invention consiste à prévoir un moule pour pneumatique dont les motifs de flancs sont réalisés avec un très haut niveau de précision.

Pour ce faire, l'invention prévoit un moule pour la vulcanisation et le moulage d'un pneumatique selon la revendication 1, ce pneumatique comprenant une bande de roulement délimitée par deux flancs, le moule comprenant une couronne destinée au moulage de la bande de roulement du pneumatique et deux coquilles comportant des caractéristiques de surface de moulage du pneumatique pour le moulage des flancs, au moins une des coquilles destinée à mouler l'un des flancs comportant une partie de coquille amovible dont l'épaisseur se situe entre 0,25 et 4,00 mm, et préférentiellement entre 2,50 et 3,00 mm, s'étendant circonférentiellement du côté du flanc du pneumatique à mouler, lesdites caractéristiques de surface de moulage étant intégrées à ladite partie de coquille amovible. La partie de coquille amovible est de préférence en forme d'anneau.

Grâce à cette architecture, les changements de configuration de moulage pour intégrer des parties de coquille ou sections avec des caractéristiques surfaciques de moulage différentes sont faciles et rapides à effectuer. On évite par ailleurs de devoir procéder à un remplacement global des coquilles, qui serait plus onéreux.

Selon un mode de réalisation avantageux, la coquille comporte une face d'appui annulaire, contre laquelle la partie de coquille amovible est disposée. Dans un exemple de réalisation, la face d'appui est sensiblement plane. Dans un autre exemple de réalisation, la face d'appui présente un profil sensiblement incurvé, la face adjacente de la partie de coquille amovible étant de forme sensiblement correspondante. Ces différents modes de réalisation permettent de prévoir une interface simple à réaliser, et présentant de bonnes caractéristiques de résistance aux efforts de moulage. La fixation de la partie de coquille amovible contre la coquille est également facilitée.

Selon encore un autre mode de réalisation, les caractéristiques de surface de moulage du pneumatique sont positionnées sensiblement sur toute la longueur de la coquille du moule.

Selon l'invention, la partie de coquille amovible est formée de plusieurs sections positionnées les unes à la suite des autres de façon circonférentielle contre la surface d'appui de la coquille. Ce mode de réalisation offre une grande souplesse. L'invention propose ainsi de fabriquer une coquille en plusieurs éléments en vue de faciliter sa réalisation. En outre, comme chaque section présente des dimensions limitées, leur ajustement dans le moule est facilité. De plus, en cas de modifications des caractéristiques de motifs ou marquage sur le flanc du pneumatique, seules les parties de coquille comprenant les zones concernées par ces modifications sont remplacées. Il n'est donc pas nécessaire de remplacer l'ensemble de la coquille. Cet aspect de l'invention permet par exemple de prévoir au moins deux sections présentant des caractéristiques de surface de moulage différentes.

Selon un mode de réalisation avantageux, au moins une section est réalisée par frittage laser, ladite section comportant tout ou partie des caractéristiques surfaciques de moulage. Le procédé du frittage laser est un procédé qui consiste à construire une pièce couche par couche en superposant successivement des couches de poudre et en fusionnant sélectivement cette poudre. Ce procédé peut être assisté par ordinateur ce qui permet de construire des pièces assez complexes. En utilisant ce procédé de frittage pour réaliser des sections, il est possible de former sur ces parties d'insert des agencements de motifs et/ou marquages complexes permettant d'améliorer les caractéristiques esthétiques et/ou opérationnelles du pneumatique.

Dans un autre mode de réalisation, au moins une section est réalisée en fonte d'aluminium.

Dans un autre mode de réalisation, la coquille et la partie de coquille amovible comprennent une ouverture traversante, comme par exemple un alésage, s'étendant entre le flanc et l'extérieur de la coquille. Ce type d'agencement permet d'introduire un moyen pour faire sortir la coquille lorsque celle-ci est fixée à force dans le moule. En variante, plusieurs ouvertures ou alésages sont répartis le long de la circonférence, par exemple un par section.

Dans un autre mode de réalisation, une section est pourvue d'une languette en forme de « L », elle-même adaptée pour insertion dans une rainure de forme adaptée prévue au niveau de la face de support de la coquille.

Dans un autre mode de réalisation, des éléments complémentaires annulaires en forme de « U » prévus sous la partie de coquille amovible et sur la face de support permettent de réaliser un positionnement de la partie de coquille amovible.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1 représente schématiquement une vue en coupe d'un moule pourvu d'un insert annulaire réalisé selon l'invention ;
- la figure 2 représente schématiquement une vue en perspective d'un exemple de coquille avec partie de coquille amovible selon l'invention ;
- la figure 3 représente schématiquement une vue en perspective d'un exemple de coquille avec partie de coquille amovible en plusieurs sections selon l'invention ;
- la figure 4 représente schématiquement une vue en perspective d'un exemple de coquille avec partie de coquille amovible selon l'invention avec interface incurvée;
- les figures 5 et 6 représentent schématiquement des vues en perspective d'un exemple de coquille avec partie de coquille amovible selon l'invention avec languette et rainure de fixation en forme de « L »;
- la figure 7 représente schématiquement une vue en perspective d'un exemple de coquille avec partie de coquille amovible selon l'invention avec languette et rainure de fixation en forme de « U ».

Dans la description qui va suivre, des éléments sensiblement identiques ou similaires seront désignés par des références identiques.

### DESCRIPTION DETAILLEE DE L'INVENTION

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc» d'un pneumatique, on entend une surface latérale du pneumatique disposée entre la bande de roulement du pneumatique et un bourrelet de ce pneumatique.

Par « sculpture », on entend les agencements surfaciques et volumiques de mélanges caoutchoutiques à la surface externe du pneumatique prévus pour assurer le contact avec la surface de roulage, et dont la forme permet d'ajuster les performances opérationnelles du pneumatique. Les sculptures permettent aussi de conférer un aspect esthétique à la bande de roulement ou autre zone du pneumatique tel que les flancs.

Par « bourrelet » d'un pneumatique, on entend une partie du pneumatique destinée à prendre assise sur une jante de roue.

Par « moule », on entend un ensemble d'éléments de moule séparés qui, par rapprochement relatif, permettent de délimiter un espace de moulage toroïdal pour la vulcanisation et le moulage d'un pneumatique.

Par « plan équatorial », on entend un plan perpendiculaire à un axe de révolution du moule et séparant ce moule en deux 1/2 moules identiques.

Par « plan méridien », on entend un plan contenant l'axe de révolution du moule.

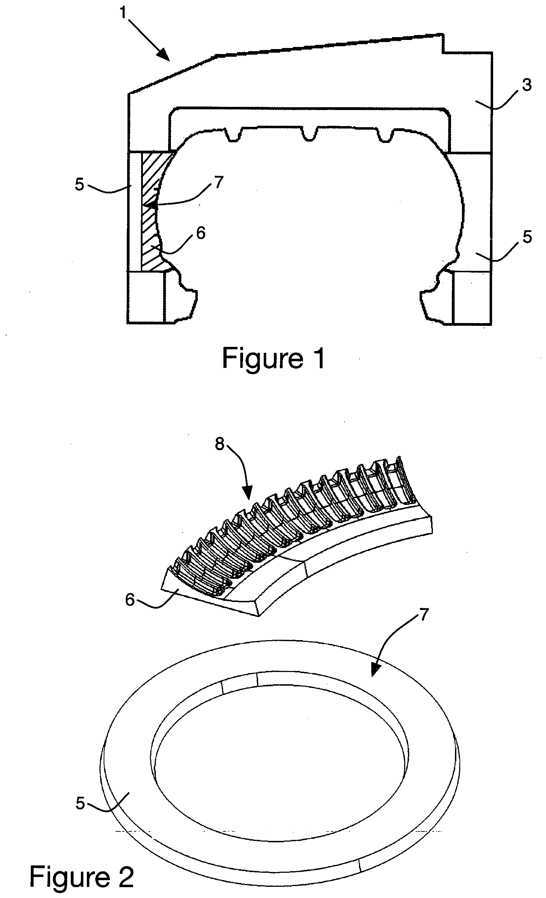

Comme on le voit à la figure 1, le moule 1 comprend une couronne 3 destinée au moulage de la bande de roulement d'un pneumatique et deux coquilles 5 s'étendant le long de la circonférence des flancs pour le moulage de ces derniers. Une partie de coquille amovible 6 (ou anneau amovible) est montée de façon amovible contre une face d'appui 7 de la coquille. La partie de coquille amovible 6 comporte des caractéristiques de surface de moulage 8 de flanc du pneumatique. Ces éléments de formage/moulage sont prévus de façon à façonner des motifs, marquages, décors, ou tout élément visuel susceptible d'être prévu dans la zone du flanc du pneumatique à mouler, soit pour conférer un aspect esthétique particulier, et/ou pour fournir des éléments d'identification du pneumatique à produire.

Dans les exemples de réalisation illustrés, les caractéristiques de surface de moulage 8 du pneumatique sont positionnées sensiblement sur toute la hauteur de la coquille.

D'autres dispositions le long de la hauteur du flanc peuvent aussi être prévues.

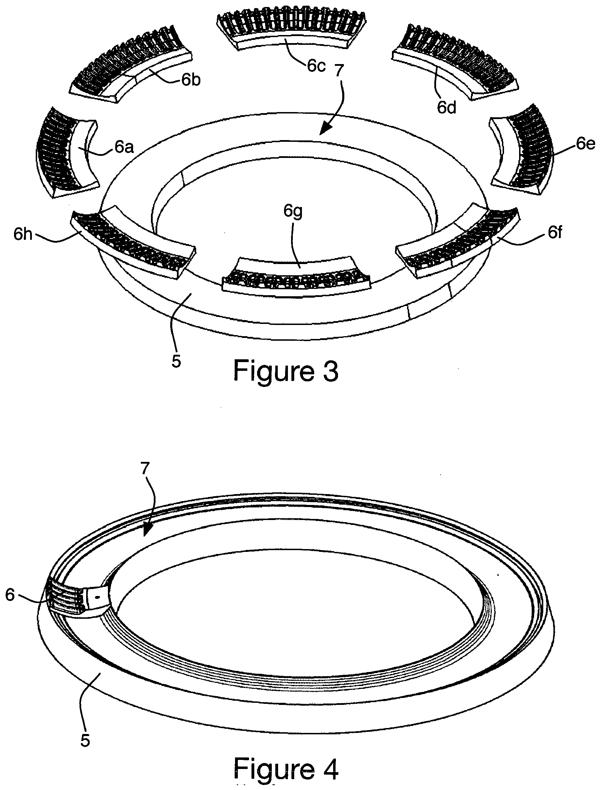

Tel que montré dans l'exemple de réalisation de la figure 3, la partie de coquille amovible peut être formée de plusieurs sections 6a à 6h alignées angulairement les unes à la suite des autres de façon à former un anneau aux dimensions adaptées pour insertion dans l'emplacement prévu pour la coquille.

**Aux** figures 2 et 3, la face d'appui 7 et la face arrière de la partie de coquille amovible sont sensiblement planes et de formes correspondantes.

Dans la variante de réalisation présentée à la figure 4, la face d'appui 7 de coquille comporte un profil sensiblement concave. Un tel profil permet de prévoir une partie de coquille amovible ou section de faible épaisseur, mais avec un maintien ferme et efficace, assurant la rigidité de l'ensemble coquille/partie de coquille amovible.

Dans ces variantes de réalisation, le positionnement de la partie de coquille amovible ou des sections contre la face d'appui de la coquille confère un appui solide permettant de bien résister aux efforts de moulage.

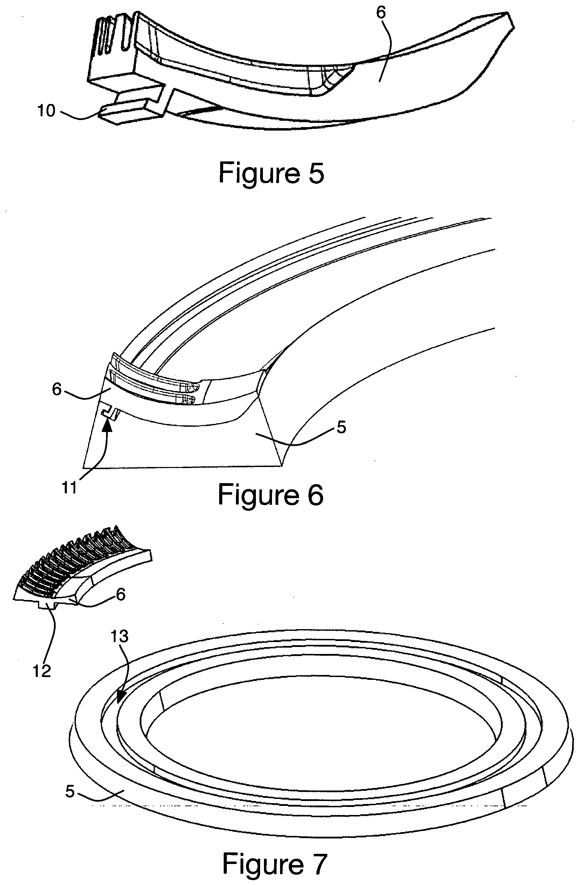

La fixation simple et rapide des sections contre la face de support constitue un autre des avantages de la présente invention. Par exemple, les figures 5 et 6 montrent un exemple de réalisation dans lequel une section est pourvue d'une languette 10 en forme de « L ». Cette languette est adaptée pour insertion dans une rainure 11 de forme adaptée prévue au niveau de la face de support de la coquille. Le bord éloigné de la languette peut être collé ou vissé sur la coquille.

La figure 7 montre un autre exemple de réalisation dans lequel des éléments complémentaires 12 et 13 en forme de « U » prévus sous la partie de coquille amovible et sur la face de support permettent de réaliser un positionnement fiable et précis de la partie de coquille amovible, qui peut être par ailleurs vissée ou collée à la coquille.

On constate que la procédure consistant à substituer des sections pour d'autres avec d'autres motifs est très simple et peu coûteuse à réaliser.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Moule (1) pour la vulcanisation et le moulage d'un pneumatique, ce pneumatique comprenant une bande de roulement délimitée par deux flancs, le moule comprenant une couronne (3) destinée au moulage de la bande de roulement du pneumatique et deux coquilles (5) comportant des caractéristiques de surface de moulage (8) du pneumatique pour le moulage des flancs, au moins une des coquilles (5) destinée à mouler l'un des flancs comportant une partie de coquille (6) amovible s'étendant circonférentiellement du côté du flanc du pneumatique à mouler, lesdites caractéristiques de surface de moulage (8) étant intégrées à ladite partie de coquille amovible (6) **caractérisé en ce que** l'épaisseur de la partie de coquille amovible se situe entre 0,25 et 4,00 mm, et préférentiellement entre 2,50 et 3,00 mm, la partie de coquille amovible est formée de plusieurs sections (6a-6h) positionnées les unes à la suite des autres contre la surface d'appui de la coquille.

2. Moule selon la revendication 1, **caractérisé en ce que** la coquille comporte une face d'appui (7) annulaire, contre laquelle la partie de coquille amovible (6) est disposée.

3. Moule selon la revendication 2, **caractérisé en ce que** la face d'appui (7) est sensiblement plane.

4. Moule selon la revendication 2, **caractérisé en ce que** la face d'appui (7) présente un profil sensiblement incurvée, la face adjacente de la partie de coquille amovible (6) étant de forme sensiblement correspondante.

5. Moule selon l'une des revendications 1 à 4, chaque section ayant une surface de moulage apte à être en contact avec le pneumatique, **caractérisé en ce qu'**au moins deux sections présentent des caractéristiques de surface de moulage différentes.

6. Moule selon l'une des revendications 1 à 5, **caractérisé en ce qu'**au moins une section (6) est réalisée par frittage laser, ladite section comportant tout ou partie des caractéristiques surfaciques de moulage (8).

7. Moule selon l'une des revendications 1 à 5, **caractérisé en ce qu'**au moins une section (6) est réalisée en fonte d'aluminium.

8. Moule selon l'une des revendications 1 à 7, dans lequel une section est pourvue d'une languette (10) en forme de « L » adaptée pour insertion dans une rainure (11) de forme adaptée prévue au niveau de la face de support de la coquille.

9. Moule selon l'une des revendications 1 à 7, dans lequel des éléments complémentaires annulaires en forme de « U » prévus sous la partie de coquille amovible et sur la face de support permettent de réaliser un positionnement de la partie de coquille amovible.

## Patentansprüche

1. Form (1) zur Vulkanisation und zur Formung eines Reifens, wobei dieser Reifen einen Laufstreifen umfasst, der von zwei Seitenwänden begrenzt wird, wobei die Form einen Ring (3), der zur Formung des Laufstreifens des Reifens bestimmt ist, und zwei Seitenplatten (5), die Formflächenmerkmale (8) des Reifens aufweisen, zum Formen der Seitenwände umfasst, wobei wenigstens eine der Seitenplatten (5), die dazu bestimmt ist, eine der Seitenwände zu formen, einen lösbaren Seitenplattenteil (6) aufweist, der sich auf der Seite der Seitenwand des zu formenden Reifens in Umfangsrichtung erstreckt, wobei die Formflächenmerkmale (8) in den lösbaren Seitenplattenteil (6) integriert sind, **dadurch gekennzeichnet, dass** die Dicke des lösbaren Seitenplattenteils zwischen 0,25 und 4,00 mm und vorzugsweise zwischen 2,50 und 3,00 mm liegt, wobei der lösbare Seitenplattenteil von mehreren Teilstücken (6a-6h) gebildet wird, die nacheinander an der Anlagefläche der Seitenplatte positioniert sind.

2. Form nach Anspruch 1, **dadurch gekennzeichnet, dass** die Seitenplatte eine ringförmige Anlageseite (7) aufweist, an welcher der lösbare Seitenplattenteil (6) angeordnet ist.

3. Form nach Anspruch 2, **dadurch gekennzeichnet, dass** die Anlageseite (7) im Wesentlichen eben ist.

4. Form nach Anspruch 2, **dadurch gekennzeichnet, dass** die Anlageseite (7) ein im Wesentlichen einwärts gekrümmtes Profil aufweist, wobei die benachbarte Seite des lösbaren Seitenplattenteils (6) von einer im Wesentlichen entsprechenden Form ist.

5. Form nach einem der Ansprüche 1 bis 4, wobei jedes Teilstück eine Formfläche aufweist, die geeignet ist, mit dem Reifen in Kontakt zu stehen, **dadurch gekennzeichnet, dass** wenigstens zwei Teilstücke unterschiedliche Formflächenmerkmale aufweisen.

6. Form nach einem der Ansprüche 1 bis 5, **dadurch gekennzeichnet, dass** wenigstens ein Teilstück (6) durch Lasersintern hergestellt ist, wobei dieses Teilstück alle Formflächenmerkmale (8) oder einen Teil davon aufweist.

7. Form nach einem der Ansprüche 1 bis 5, **dadurch gekennzeichnet, dass** wenigstens ein Teilstück (6) aus Aluminiumguss hergestellt ist.

8. Form nach einem der Ansprüche 1 bis 7, wobei ein Teilstück mit einer L-förmigen Feder (10) versehen ist, die für das Einsetzen in eine Nut (11) von angepasster Form ausgelegt ist, die an der Stützseite der Seitenplatte vorgesehen ist.

9. Form nach einem der Ansprüche 1 bis 7, wobei komplementäre ringförmige Elemente in U-Form, die unter dem lösbaren Seitenplattenteil und auf der Stützseite vorgesehen sind, es ermöglichen, eine Positionierung des lösbaren Seitenplattenteils durchzuführen.

## Claims

1. Mould (1) for vulcanizing and moulding a tyre, this tyre comprising a tread delimited by two sidewalls, the mould comprising a ring (3) intended for moulding the tread of the tyre and two shells (5) having tyre-moulding surface features (8) for moulding the sidewalls, at least one of the shells (5) intended for moulding one of the sidewalls having a removable shell part (6), extending circumferentially on the side of the sidewall of the tyre to be moulded, said moulding surface features (8) being incorporated into said removable shell part (6), **characterized in** the the thickness of the removable shell part is between 0.25 and 4.00 mm, and preferably between 2.50 and 3.00 mm and **in that** the removable shell part is formed from a plurality of sections (6a-6h) that are positioned one after another against the bearing surface of the shell.

2. Mould according to Claim 1, **characterized in that** the shell has an annular bearing face (7) against which the removable shell part (6) is disposed.

3. Mould according to Claim 2, **characterized in that** the bearing face (7) is substantially planar.

4. Mould according to Claim 2, **characterized in that** the bearing face (7) has a substantially curved profile, the face adjacent to the removable shell part (6) having a substantially corresponding shape.

5. Mould according to Claim 1 to 4, wherein each section has a moulding surface able to be in contact with the tyre, **characterized in that** at least two sections have different moulding surface features.

6. Mould according to one of Claims 1 to 5, **characterized in that** at least one section (6) is produced by laser sintering, said section having all or some of the moulding surface features (8).

7. Mould according to one of Claims 1 to 5, **characterized in that** at least one section (6) is produced from cast aluminium.

8. Mould according to one of Claims 1 to 7, wherein one section is provided with an L-shaped tongue (10) designed to be inserted into a groove (11) of suitable shape provided at the support face of the shell.

9. Mould according to one of Claims 1 to 7, wherein complementary U-shaped annular elements provided under the removable shell part and on the support face make it possible to position the removable shell part.
